# EUROPEAN PATENT SPECIFICATION

(11) **EP 2 745 095 B1**
(45) Date of publication and mention of the grant of the patent: **08.12.2021**
(21) Application number: 11760716.8
(22) Date of filing: 17.08.2011
(51) Int. Cl.: G01N 21/64, G01N 21/27, G01N 21/77, G01N 21/03

(54) **TOOL AND METHOD FOR VALIDATING OPERATIONAL PERFORMANCE OF A PHOTOLUMINESENCE BASED ANALYTICAL INSTRUMENT**
APPARAT UND VERFAHREN ZUR BESTÄTIGUNG DER FUNKTIONALITÄT EINES ANALYTISCHEN INSTRUMENTS BASIEREND AUF PHOTOLUMINESZENZ
APPAREIL ET MÉTHODE DE VALIDATION DE LA PERFORMANCE OPÉRATIONNELLE D'UN INSTRUMENT ANALYTIQUE BASÉ SUR LA PHOTO-LUMINESCENCE

(43) Date of publication of application: 25.06.2014
(73) Proprietor: Agilent Technologies, Inc., Santa Clara, CA 95051 (US)
(72) Inventor: PAPKOVSKY, Dmitri Boris, Blarney Co Cork (IE); HYNES, James Niall, Ovens Co. Cork (IE)
(74) Representative: Purdylucey Intellectual Property
(86) International application number: PCT/EP2011/064182
(87) International publication number: WO 2013/023697

(56) References cited:
- WO-A1-2010/053888
- US-A- 5 030 420
- US-A- 5 094 959
- US-A- 5 595 708
- US-A- 6 080 574
- US-A1- 2008 215 254
- US-A1- 2009 029 402
- US-A1- 2011 154 881
- US-B1- 6 379 969
- US-B2- 7 135 342
- US-B2- 7 138 270

## Description

### BACKGROUND

Photoluminescent sensors or probes are a widely employed method of measuring analyte concentration, typically oxygen, within an enclosed space such as a package or container. See, for example United States Published Patent Applications 2009/0029402, 2008/8242870, 2008/215254, 2008/199360, 2008/190172, 2008/148817, 2008/146460, 2008/117418, 2008/0051646, and 2006/0002822, and United States Patents 7,569,395, 7,534,615, 7,368,153, 7,138,270, 6,689,438, 5,718,842, 4,810,655, and 4,476,870.

Briefly, analyte concentration within a package or container can be measured by placing an analyte sensitive photoluminescent probe within the package or container, allowing the probe to equilibrate within the package or container, exciting the probe with radiant energy, and measuring the extent to which radiant energy emitted by the excited probe is quenched by the presence of the target analyte. Such optical sensors are available from a number of suppliers, including Presence Precision Sensing, GmbH of Regensburg, Germany, Oxysense of Dallas, Texas, United States, and Luxcel Biosciences, Ltd of Cork, Ireland.

Such probes can be used to quantify a rate of oxygen uptake by biological and chemical samples, thereby serving as a biomarker of cell or organism viability. Also, many oxygen-dependent enzymatic and chemical reactions can be monitored via oxygen consumption, providing a means for evaluating the performance of various reactants, catalysts, enzymes, etc. and the effect of various conditions (e.g., temperature, pressure, concentrations, etc.).

The placement of photoluminescent probes into vials for monitoring oxygen consumption by a sample placed into the vial is known. United States Patent Nos. 5,371,016 and 6,080,574 describe optical systems for measuring sample sterility and microbial growth by monitoring oxygen consumption by a sample placed within a vial having a fluorescence-based oxygen sensor built into the vial. WO98/15645 describes an optical system that uses a solid-state luminescence-based oxygen sensor to assess a biological sample containing living micro-organisms by measuring gradients of dissolved oxygen within the sample. United States Patent No. 5,882,922 describes a system for measuring oxygen consumption in samples using wells containing a solid-state oxygen sensor coating applied to the bottom of each well or soluble oxygen probes added to each sample.

The technique is well suited for use in establishing whether the microbial count in a product, such as a processed food, meets health and safety standards established for such products. When employed for such purposes, the system typically reports each sample as PASS / FAIL based upon whether the sample is found to have a microbial count above or below an established threshold value, with the vast majority of samples reported as PASS.

Unfortunately, such systems are susceptible to masked malfunctions (i.e., a gross malfunction ― as opposed to a minor error in accuracy such as a drift in calibration - in an analytical instrument that causes the instrument to generate false data or provide false reports which are not readily noticed during normal use and operation of the instrument) as a system suffering from a gross malfunction is likely to report samples as PASS even though the system is not effectively measuring microbial count. When a masked malfunction is discovered it can require the destruction and/or recall of product manufactured over a substantial period of time as there is no way to ascertain when the masked malfunction occurred.

US 2011/154881 discloses a card for two-point calibration of an instrument which interrogates probes capable of generating a perceptible signal reflective of the value of a sensed concentration of oxygen in fluid communication with the probe. The card is equipped with two separate and distinct working probes, both having the same sensitivity to oxygen. Calibration readings at two different known concentrations of oxygen are obtained by sealing-off one of the working probes along with an activated air metal battery to ensure that the working probe experiences a 0% concentration of oxygen, and exposing the other working probe to atmosphere so that the working probe experiences an atmospheric (20.95%) concentration of oxygen

Accordingly, a substantial need exists for quick, simple and inexpensive tool and method for validating operational performance of photoluminescence based analytical instruments.

### SUMMARY OF THE INVENTION

A first aspect of the invention is a tool according to the appended claims The tool is for use in combination with working vessels having a certain design feature, wherein the working vessels equipped with a working probe comprising an optically-active material sensitive to a target analyte, selected from oxygen, carbon dioxide, carbon monoxide and pH,of a sample placed within the working vessel so as to be capable of generating a perceptible signal reflective of the value of such sensed target analyte when interrogated by an instrument specifically adapted to interrogate a working probe on a working vessel having a certain design feature, the tool comprising
a reference vessel separate and distinct from the working vessels while having the certain design feature, characterised by a surrogate probe on the reference vessel, wherein said surrogate probe has reduced sensitivity to said given target compared with said working probe and is and is effective for consistently generating a perceptible signal of known value when interrogated by the instrument regardless of the actual value of the target analyte in communication with the surrogate probe.

The first embodiment of the first aspect of the invention is preferably adapted for use in connection with an instrument that is effective for classifying a sample within a working vessel as a positive sample or a negative sample based upon a threshold value of the perceptible signal generated by the working probe on the working vessel containing the sample, and the known value of the perceptible signal generated by the surrogate probe on the reference vessel when interrogated by the instrument is effective for causing the reference vessel to be classified as a positive sample when interrogated by the instrument.

A second embodiment of the first aspect of the invention comprises a reference vessel having the certain design feature and equipped with a surrogate probe effective for consistently generating a perceptible signal indicative of a positive sample in communication with a working probe when interrogated by the instrument regardless of the actual value of the variable in communication with the surrogate probe.

In an embodiment, the tool of the current invention is for use in detecting changes in a variable characteristic of samples so as to permit classification of each sample as a positive sample or a negative sample, wherein said working vessel comprises a plurality of working vessels, each equipped with a working probe sensitive to a given target analyte of a sample placed into the vessel and capable of generating a perceptible signal reflective of the value of such given target analyte, wherein the ratio of working vessels to reference vessels is greater than 1:1.

A third aspect of the invention is a method for validating operational integrity of an analytical instrument, specifically adapted to interrogate photoluminescent working probes on vessels having a particular design feature, utilizing the tool of the current invention interrogating the surrogate probe on the reference vessel of the tool with the analytical instrument to generate a perceptible signal having a reference value, and, comparing the reference value with the known value.

In an embodiment, the method of the invention further comprises, prior to step (a), (i) placing aliquots from one or more samples into a plurality of the working vessels to form filled working vessels, (ii) periodically interrogating the working probes on the filled working vessels with the analytical instrument throughout a testing period, (iii) recording data obtained from interrogation of the filled working probes, and following step (b), designating the recorded data as invalid when the reference value deviates from the known value by a threshold value.

Disclosed herein is a method for assessing any change in the value of a perceptible signal generated by a photoluminescent working probe sensitive to a given variable, caused by an attribute of a sample placed into operable communication with the probe other than the given variable. The disclosed method includes the steps of (i) obtaining a tool in accordance with the first embodiment of the first aspect of the invention, (ii) interrogating the surrogate probe on the reference vessel *sans* sample to generate a perceptible signal having a reference value, (iii) placing an aliquot from a sample into the reference vessel to form a filled reference vessel, (iv) interrogating the surrogate probe on the filled reference vessel to generate a perceptible signal having an affected value, and (v) determining deviation between reference value and affected value.

The determined deviation can be employed to calibrate the analytical instrument used to interrogate the surrogate probe in order to compensate for the determined deviation.

### BRIEF DESCRIPTION OF THE DRAWINGS

Figure 1 is a side view of one embodiment of a reference vessel in accordance with this invention.
Figure 1A is a grossly enlarged cross-sectional side view of the surrogate probe depicted in Figure 1.
Figure 2 is a side view of one embodiment of a several working vessels in accordance with this invention, each containing a sample.
Figure 2A is a grossly enlarged cross-sectional side view of the working probe depicted in Figure 2.

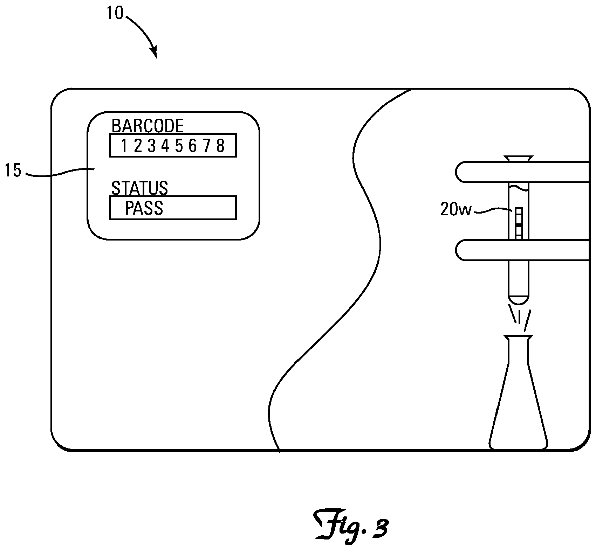

Figure 3 is a depiction of one of the working vessels depicted in Figure 2 being interrogated by an analytical instrument adapted to interrogate the working probe on the working vessel.

### DETAILED DESCRIPTION OF A PREFERRED EMBODIMENT

### Nomenclature

- **10**: Interrogation Device
- **15**: Display Component of Interrogation Device
- **20r**: Reference Vessel
- **20w**: Working Vessel
- **21r**: Open Top End of Reference Vessel
- **21w**: Open Top End of Working Vessel
- **22r**: Closed Bottom End of Reference Vessel
- **22w**: Closed Bottom End of Working Vessel
- **29r**: Retention Chamber of Reference Vessel
- **29w**: Retention Chamber of Working Vessel
- **30r**: Surrogate Probe on Reference Vessel
- **30w**: Working Probe on Working Vessel
- **31r**: Oxygen-Sensitive Photoluminescent Dye Component of Surrogate Probe
- **31w**: Oxygen-Sensitive Photoluminescent Dye Component of Working Probe
- **32r**: Carrier Matrix Component of Surrogate Probe
- **32w**: Carrier Matrix Component of Working Probe
- **40**: Barcode
- **50**: Sample

### Definitions

As used herein, including the claims, the phrase "***positive sample***" means a sample that, when in operable communication with a probe/sensor sensitive to a given variable and within any appropriate test period during which pertinent changes in the given variable should occur in the sample, causes the probe to generate a perceptible signal indicating that the value of the given variable possessed or exhibited by the sample is beyond a detectable threshold value. For example, a sample in communication with an oxygen sensitive photoluminescent probe in which viable aerobic bacteria within the sample has consumed sufficient oxygen to reduce the dissolved oxygen concentration in the sample below a threshold value of 10% O₂ within twelve hours ― detected by measuring changes in the probe's optical signal ― is a positive sample.

As used herein, including the claims, the phrase "***negative sample***" means a sample that, when in operable communication with a probe sensitive to a given variable and after any appropriate test period during which pertinent changes in the given variable should occur in the sample, does not cause the probe to generate a perceptible signal indicating that the value of the given variable possessed or exhibited by the sample is beyond a detectable threshold value. For example, (i) a sample in communication with an oxygen sensitive photoluminescent probe in which viable aerobic bacteria within the sample have not consumed sufficient oxygen to reduce the dissolved oxygen concentration in the sample below 10% O₂ from the initial concentration within an appropriate test period of twelve hours ― detected by measuring changes in the probe's optical signal ― when the threshold value is at 10% O₂ from the initial concentration, is a negative sample, and (ii) a sample in communication with an oxygen sensitive photoluminescent probe in which viable aerobic bacteria within the sample required sixteen hours to consume sufficient oxygen to reduce the oxygen concentration in the sample to a threshold value of a 10% reduction from the initial concentration ― detected by measuring changes in the probe's optical signal ― when the appropriate test period is twelve hours, is a negative sample.

As used herein, including the claims, the phrase "***oxygen permeable***" means a material that when formed into a 1 mil (25.4 µm) film has an oxygen transmission rate of greater than 1,000 cm³/m² day when measured in accordance with ASTM D 3985.

As used herein, including the claims, the phrase "***highly oxygen permeable***" means a material that when formed into a 1 mil (25.4 µm) film has an oxygen transmission rate of greater than 2,000 cm³/m² day when measured in accordance with ASTM D 3985.

As used herein, including the claims, the phrase "***oxygen impermeable***" means a material that when formed into a 1 mil (25.4 µm) film has an oxygen transmission rate of less than 100 cm³/m² day when measured in accordance with ASTM F 1927.

As used herein, including the claims, the phrase "***oxygen barrier***" means a layer of material or laminated layers of materials that has an oxygen transmission rate of less than 200 cm³/m² day when measured in accordance with ASTM F 1927.

As used herein, including the claims, the phrase "***masked malfunction***"*,* when used to describe a condition of an analytical instrument, means a gross malfunction ― as opposed to a minor error in accuracy such as a drift in calibration - in an analytical instrument that causes the instrument to generate false data or provide false reports which are not readily noticed during normal use and operation of the instrument. For example, complete failure of a sensor in an analytical instrument that causes the instrument to report all samples as NEGATIVE or ACCEPTABLE (*e.g.*, containing less than a threshold concentration of a target-analyte) regardless of actual conditions, when all samples are normally and routinely reported as NEGATIVE or ACCEPTABLE, is a "masked malfunction".

### Construction

A first aspect of the invention is a tool useful for validating operational integrity of an analytical instrument **10** designed to interrogate photoluminescent working probes **30w** on working vessels **20w** having a particular design feature. The particular design feature may be selected from any design feature or characteristic including specifically, but not exclusively size, shape, exterior contour, configuration, location of working probe **30w** on the working vessel **20w,** etc.

The working probe **30w** can be any device capable of sensing and reporting changes in a given target analyte selected from oxygen, carbon dioxide, carbon monoxide and pH, such as changes in a target-analyte concentration (e.g., H⁺, CO, CO₂ or O₂), within an enclosed volume. In a preferred embodiment, the working probe **30w** is an optically-active, target-analyte sensitive material configured and arranged to experience changes in target-analyte concentration or partial pressure P_{A} in a sample **50** placed within the retention chamber **29w** of a working vessel **20w.** The analyte-sensitive material is preferably a photoluminescent dye embedded within an analyte permeable polymer matrix. Since the preferred type of working probe **30w** is an optically-active, target-analyte sensitive material, and the most frequent target-analyte of interest is oxygen, the balance of the disclosure shall be based upon a photoluminescent oxygen quenched working probe **30w** without intending to be limited thereby.

Analytical instruments **10** for interrogating probes based on the quenching of photoluminescence by an analyte are well known and commercially available from various sources, including bioMerieux SA of France and Mocon, Inc. of Minneapolis, Minnesota.

The radiation emitted by an excited probe can be measured in terms of intensity and/or lifetime (rate of decay, phase shift or anisotropy), with measurement of lifetime generally preferred as a more accurate and reliable measurement technique.

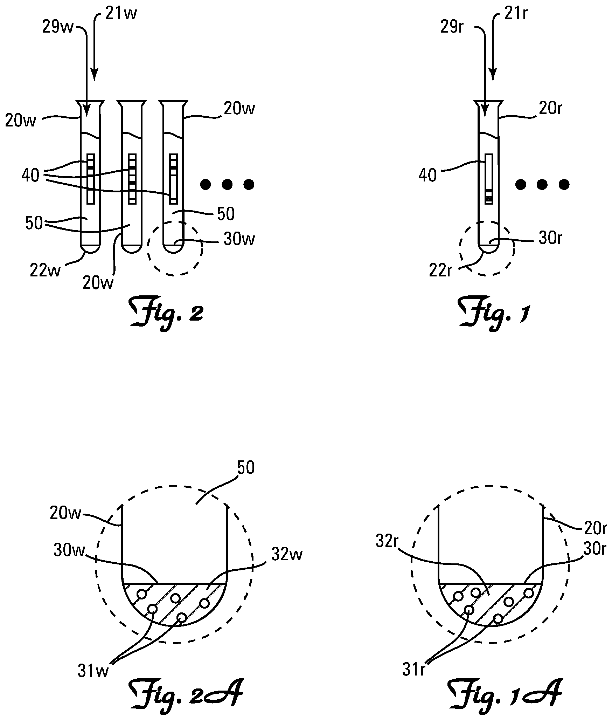

Referring to Figures 1 and 1A, the tool is a reference vessel **20r** having the particular design feature and equipped with a surrogate probe **30r.** Providing the reference vessel **20r** with the particular design feature allows the reference vessel **20r** to be interrogated by the analytical instrument **10** without requiring special handling or manipulation of the reference vessel **20r** or irregular operation of the analytical instrument **10.**

The surrogate probe **30r** is effective for consistently generating a perceptible signal of known value when interrogated by the instrument **10** regardless of the actual value of the variable (*e.g.*, oxygen concentration) in communication with the surrogate probe **30r.** That known value is preferably one that is effective for causing the reference vessel **20r** to be classified as a positive sample when interrogated by the instrument **10.**

In a preferred embodiment, the surrogate probe **30r** comprises an oxygen-sensitive photoluminescent dye **31r** that is the same as the oxygen-sensitive photoluminescent dye **31w** employed in working probes **30w** interrogated by the analytical instrument **10,** but contrary to the working probes **30w** that embed the oxygen-sensitive photoluminescent dye **31w** within a working carrier matrix **32w** that render the working probe **30w** sensitive to oxygen concentration, the surrogate probe **30r** embeds the oxygen-sensitive photoluminescent dye **31r** within a surrogate carrier matrix **32r** that renders the surrogate probe **30r** less sensitive to oxygen concentration. Most preferably the surrogate carrier matrix **32r** is an oxygen impermeable material effective for causing the analytical instrument **10** to reliably recognize and report the surrogate vessel **20r** as a vessel containing a positive sample **50** regardless of the actual concentration of oxygen in the retention chamber **29r** of the reference vessel **20r.**

The reference vessel **20r** is preferably selected from the same stock used for the working vessels **20w.** Exemplary vessels suitable for use as the working vessels **20w** - and thereby the reference vessel **20r,** include vials, cuvettes, multi-well plates (*e.g.,* 6, 12, 24, 48, 96 and 384 well plates), and the like formed from materials such as a plastic (*e.g.,* polypropylene or polyethylene terphthalate) or glass.

When the surrogate probe **30r** is based on the quenching of photoluminescence by an analyte, the reference vessel **20r,** or at least that portion of the reference vessel **20r** coated with the surrogate probe **30r,** must allow radiation at the excitation and emission wavelengths to be transmitted to and received from the surrogate probe **30r** with minimal interference. The surrogate probe **30r** is preferably positioned within the retention chamber **29r** proximate the bottom end **22r** of the reference vessel **20r.**

The oxygen-sensitive photoluminescent dye **31r** and **31w** rmay be selected from any of the well-known oxygen sensitive photoluminescent dyes used in the construction of oxygen sensitive photoluminescent probes (not shown). A nonexhaustive list of such oxygen sensitive photoluminescent dyes **50** includes specifically, but not exclusively, ruthenium(II)-bipyridyl and ruthenium(II)-diphenylphenanothroline complexes, porphyrin-ketones such as platinum(II)-octaethylporphine-ketone, platinum(II)-porphyrin such as platinum(II)-tetrakis(pentafluorophenyl)porphine, palladium(II)-porphyrin such as palladium(II)-tetrakis(pentafluorophenyl)porphine, phosphorescent metallocomplexes of tetrabenzoporphyrins, chlorins, azaporphyrins, and long-decay luminescent complexes of iridium(III) or osmium(II).

The surrogate carrier matrix **32r** is selected to be less permeable to oxygen than the working carrier matrix **32w,** and is preferably an oxygen-impermeable composition that renders the surrogate probe **30r** at least 10 times less sensitive to oxygen than working probes **30w,** more preferably at least 50 times less sensitive to oxygen than the working probes **30w,** and most preferably at least 100 times less sensitive to oxygen than the working probes **30w.**

The surrogate probe **30r** preferably generates a photoluminescence intensity signal that will be unfailingly recognized by the analytical instrument and reported as a positive sample. One of routine skill in the art is capable of selecting a suitable surrogate carrier matrix **32r.** A nonexhaustive list of suitable polymers for use as the oxygen-impermeable surrogate carrier matrix **62** includes specifically, but not exclusively, polyvinylidine chloride copolymers such as polyvinylidine chloride ― polyvinyl chloride and polyvinylidene chloride-acrylonitrile, polyvinyl chloride, polyvinyl alcohol, polyethylene vinyl alcohol and polymethylmethacrylate.

As is well known to those of routine skill in the art, suitable working carrier matrix 32w include polymers such as silicone, polystryrene, polycarbonate, polysulfone, etc.

The reference vessel **20r** is preferably imprinted with both computer readable (*e.g.,* barcode) and human perceptible indicia **40** that identifies the vessel as a reference vessel **20r ―** thereby allowing the microcontroller for the analytical instrument **10** and/or the human operator to recognize the "positive" reading obtained from the surrogate vessel **20r** as the result of a validation test, and also recognize the lack of a "positive" reading obtained from the surrogate vessel **20r** as indicative of a system failure or malfunction requiring further investigation and possible remedial action.

A reference vessel **20r** can be sold individually, as a consumable component of each analytical instrument **10,** and/or as a consumable component of each set or group of working vessels **20w** (*e.g.,* a reference vessel **20r** provide with each set of 40, 80, 100 or more working vessels **20w** ordered) obtained for use with a given analytical instrument.

### Manufacture

The reference vessel **20r** can be conveniently manufactured by the same basic processes employed to manufacture working vessels **20w** except that the working carrier matrix **32w** is replaced with a surrogate carrier matrix **32r.** Briefly, the process includes the steps of (A) preparing a coating cocktail (not shown) which contains the surrogate oxygen-sensitive photoluminescent dye **31r,** such as Pt-octaethylporphine-ketone, and the surrogate oxygen-impermeable carrier matrix **32r,** such as polyvinylidene chloride - acrylonitrile copolymer, in an organic solvent (not shown) such as acetone, (B) depositing a small amount of the cocktail (not shown) into the bottom **22r** of the retention chamber **29r** of a vessel having the appropriate design feature, (C) and allowing the cocktail (not shown) to dry.

Generally, the concentration of the surrogate carrier matrix **32r** in the organic solvent (not shown) should be in the range of 0.1 to 20% w/w, with the ratio of dye **31r** to surrogate carrier matrix **32r** in the range of 1:50 to 1:5,000 w/w.

### Use

The reference vessel **20r** can be used to quickly and easily validate operational integrity of an analytical instrument **10.**

In a first embodiment, the surrogate probe **30r** on a reference vessel **20r** is interrogating with the analytical instrument **10** to generate a perceptible signal having a reference value, and the reference value is compared with the known value. If the reference value deviates from the known value by more than a predetermined threshold value, a perceptible signal is generated indicating detection of a system error or malfunction ― typically a masked malfunction - that requires further investigation and potential remedial action.

In a second embodiment, the method includes the steps of (i) forming filled working vessels by placing aliquots from one or more samples **50** into a plurality of the working vessels **20w,** (ii) periodically interrogating the working probes **30w** on the filled working vessels **20w** with the analytical instrument **10** throughout a testing period, (iii) recording data obtained from such interrogations, (iv) interrogating the surrogate probe **30r** on the reference vessel **20r** at least once during the testing period with the analytical instrument **10** to generate a perceptible signal having a reference value, (v) comparing the reference value with the known value, and (vi) designating the recorded data as invalid when the reference value deviates from the known value by a threshold value.

The reference vessel **20r** can also be used to quickly and easily assessing any change in the value of a perceptible signal generated by a working probe **30w** sensitive to a given variable, caused by an attribute of a sample **50** placed into operable communication with the working probe **30w** other than the given variable. The method includes the steps of (i) interrogating a surrogate probe **30r** on a reference vessel **20r** *sans* sample **50** to generate a perceptible signal having a reference value, (ii) placing a sample **50** into the reference vessel **20r** to form a filled reference vessel **20r,** (iii) interrogating the surrogate probe **30r** on the filled reference vessel **20r** to generate a perceptible signal having an affected value, and (iv) determining deviation between reference value and affected value. The determined deviation can be employed to calibrate the analytical instrument **10** used to interrogate the surrogate probe **30r** in order to compensate for the determined deviation.

The scope of the invention is defined by the appended claims.

## Claims

1. A tool for use in combination with working vessels (20w) having a certain design feature, selected from the group comprising size, shape, exterior contour, configuration, and location, wherein the working vessels (20w) are equipped with a working probe (30w) comprising an optically-active material sensitive to a target-analyte selected from oxygen, carbon dioxide, carbon monoxide and pH, of a sample (50) placed within the vessel (20w) so as to be capable of generating a perceptible signal reflective of the value of such sensed target analyte when interrogated by an instrument (10) specifically adapted to interrogate working probes (30w) on vessels having the certain design feature,
whereby the tool comprises a reference vessel (20r) separate and distinct from the working vessels (20w) while having the certain design feature of the working vessels (20w), and a surrogate probe (30r) on the reference vessel (20r), wherein said surrogate probe (30r) has reduced sensitivity to said given target analyte compared with said working probe (30w) and is effective for consistently generating a perceptible signal of known value when interrogated by the instrument (10) regardless of the actual value of the target analyte in communication with the surrogate probe (30r).

2. The tool of claim 1 wherein (i) the instrument (10) is effective for classifying a sample within a working vessel (20w) as a positive sample or a negative sample based upon a threshold value of the perceptible signal generated by the working probe (30w) on the working vessel (20w) containing the sample (50), and (ii) the known value is effective for causing the reference vessel (20r) to be classified as a positive sample when interrogated by the instrument (10).

3. The tool Claim 1 or 2, wherein said known value is one indicative of a positive sample in communication with a working probe (30w) when interrogated by the instrument (10) regardless of the actual value of the target analyte in communication with the surrogate probe (30r).

4. The tool of Claim 3 for use in detecting changes in a variable characteristic of samples (50) so as to permit classification of each sample as a positive sample or a negative sample, wherein said working vessel (20w) comprises a plurality of working vessels (20w), each equipped with a working probe (30w) sensitive to a given target analyte of a sample (10) placed into the vessel (20w) and capable of generating a perceptible signal reflective of the value of such given target analyte and at least one reference vessel equipped with a surrogate probe.

5. The tool of any one of the preceding claims wherein the reference vessel (20r) is a vial, cuvette or multiwell plate; and/or wherein the certain design feature includes at least one of configuration, exterior contour, location of the working probe (30w) on the working vessels (20w), and size; and/or wherein the surrogate probe (30r) comprises a solid state composition comprising a target-analyte-sensitive photoluminescent dye embedded within a carrier matrix that is impermeable to target-analyte.

6. The tool of any one of the preceding claims wherein (i) the working probes (30w) comprise a first solid state composition comprising a target-analyte-sensitive photoluminescent dye embedded within a target-analyte-permeable carrier matrix, wherein the first composition has a first sensitivity to target-analyte, and (ii) the surrogate probe (30r) comprises a second solid state composition comprising a target-analyte-sensitive photoluminescent dye embedded within a carrier matrix that is different from the carrier matrix in the first composition, wherein the second composition has a second sensitivity to target analyte that is different than the first sensitivity to target-analyte.

7. The tool of claim 6 wherein the target-analyte is oxygen and the working probes (30w) and the surrogate probe (30r) contain the same oxygen sensitive photoluminescent dye (31w, 31r).

8. The tool of any one of the preceding claims wherein the given variable is partial pressure of a target-analyte.

9. The tool of any one of the preceding claims wherein the working vessels (20w) and the surrogate vessel (20r), *sans* probe, are identical; and/or wherein the tool includes at least 40 working vessels (20w) per each reference vessel and the carrier matrix (32w) in the working probes (30w) is highly oxygen permeable.

10. A method for validating operational integrity of an analytical instrument (10) specifically adapted to interrogate photoluminescent working probes (30w) on working vessels (20w) having a particular design feature selected from the group comprising size, shape, exterior contour, configuration, and location, utilizing a tool in accordance with any one of the preceding claims
wherein the reference vessel (20r) has the particular design feature and the surrogate probe (30r) generates a perceptible signal having a known value when interrogated, comprising the steps of:
(a) interrogating the surrogate probe (30r) on the reference vessel (20r) of the tool with the analytical instrument (10) to generate a perceptible signal having a reference value, and
(b) comparing the reference value with the known value.

11. The method of claim 10, in which the tool is in accordance with any one of Claims 4 to 9, further comprising, prior to step (a), the steps of,
(i) placing aliquots from one or more samples into a plurality of the working vessels (20w) to form filled working vessels (20w),
(ii) periodically interrogating the working probes (30w) on the filled working vessels (20w) with the analytical instrument throughout a testing period, and
(iii) recording data obtained from interrogation of the filled working probes (30w), and
(c) after interrogating the surrogate probe (30r) on the reference vessel (20r) of the tool and comparing the reference value with the known value designating the recorded data as invalid when the reference value deviates from the known value by a threshold value.

12. The method of claim 10 or 11 wherein the method is effective for detecting a masked malfunction.

## Patentansprüche

1. Werkzeug zur Verwendung in Kombination mit Arbeitsgefäßen (20w), die ein bestimmtes Ausführungsmerkmal aufweisen, das aus der Größe, Form, Außenumriss, Konfiguration und Lage umfassenden Gruppe ausgewählt ist, wobei die Arbeitsgefäße (20w) mit einem Arbeitsfühler (30w) ausgestattet sind, der ein optisch aktives Material umfasst, das für einen aus Sauerstoff, Kohlendioxid, Kohlenmonoxid und pH einer in das Gefäß (20w) platzierten Probe (50) ausgewählten Zielanalyten empfindlich ist, um in der Lage zu sein, ein wahrnehmbares Signal zu erzeugen, das den Wert eines derartig erfassten Zielanalyten widerspiegelt, wenn er von einem Instrument (10) abgefragt wird, das speziell zum Abfragen von Arbeitsfühlern (30w) an Gefäßen mit dem bestimmten Ausführungsmerkmal angepasst ist,
wobei das Werkzeug Folgendes umfasst: ein Referenzgefäß (20r), das von den Arbeitsgefäßen (20w) getrennt und verschieden ist und dabei das bestimmte Ausführungsmerkmal der Arbeitsgefäße (20w) aufweist, und einen Ersatzfühler (30r) an dem Referenzgefäß (20r), wobei der Ersatzfühle (30r) verglichen mit dem Arbeitsfühler (30w) eine verringerte Empfindlichkeit für den Zielanalyten aufweist und wirksam ist, um ungeachtet des tatsächlichen Werts des mit dem Ersatzfühler (30r) in Verbindung stehenden Zielanalyten konsequent ein wahrnehmbares Signal mit bekanntem Wert zu erzeugen, wenn er von dem Instrument (10) abgefragt wird.

2. Werkzeug nach Anspruch 1, wobei (i) das Instrument (10) wirksam ist, um eine Probe in einem Arbeitsgefäß (20w) basierend auf einem Grenzwert des wahrnehmbaren Signals, das von der Arbeitsprobe (30w) an dem die Probe (50) enthaltenden Arbeitsgefäß (20w) erzeugt wird, als positive Probe oder negative Probe einzustufen, und (ii) der bekannte Wert wirksam ist, um zu bewirken, dass das Referenzgefäß (20r) als positive Probe eingestuft wird, wenn es von dem Instrument (10) abgefragt wird.

3. Werkzeug nach Anspruch 1 oder 2, wobei es sich bei dem bekannten Wert um einen handelt, der ungeachtet des tatsächlichen Werts des mit dem Ersatzfühler (30r) in Verbindung stehenden Zielanalyten für eine positive Probe in Verbindung mit einem Arbeitsfühler (30w), wenn er von dem Instrument (10) abgefragt wird, indikativ ist.

4. Werkzeug nach Anspruch 3 zur Verwendung beim Erkennen von Änderungen einer veränderlichen Eigenschaft von Proben (50), um die Einstufung jeder Probe als positive Probe oder negative Probe zu ermöglichen, wobei das Arbeitsgefäß (20w) Folgendes umfasst: eine Vielzahl von Arbeitsgefäßen (20w), die jeweils mit einem Arbeitsfühler (30w) ausgestattet sind, der für einen gegebenen Zielanalyten einer in das Gefäß (20w) platzierten Probe (10) empfindlich ist und in der Lage ist, ein wahrnehmbares Signal zu erzeugen, das den Wert eines derartigen gegebenen Zielanalyten widerspiegelt, und mindestens ein Referenzgefäß das mit einem Ersatzfühler ausgestattet ist.

5. Werkzeug nach einem der vorangehenden Ansprüche, wobei es sich bei dem Referenzgefäß (20r) um, ein Fläschchen, eine Küvette oder eine Multi-Well-Platte handelt; und/oder wobei das bestimmte Ausführungsmerkmal mindestens eines von Konfiguration, Außenumriss, Lage des Arbeitsfühlers (30w) an den Arbeitsgefäßen (20w) und Größe handelt; und/oder wobei der Ersatzfühler (30r) eine Festkörperzusammensetzung umfasst, die einen für den Zielanalyten empfindlichen photolumineszierenden Farbstoff umfasst, der in einer Trägermatrix eingebettet ist, die für den Zielanalyten undurchlässig ist.

6. Werkzeug nach einem der vorangehenden Ansprüche, wobei (i) die Arbeitsfühler (30w) eine erste Festkörperzusammensetzung umfassen, die einen für den Zielanalyten empfindlichen photolumineszierenden Farbstoff umfasst, der in einer für den Zielanalyten durchlässigen Trägermatrix eingebettet ist, wobei die erste Zusammensetzung eine erste Empfindlichkeit für den Zielanalyten aufweist, und (ii) der Ersatzfühler (30r) eine zweite Festkörperzusammensetzung umfasst, die einen für den Zielanalyten empfindlichen photolumineszierenden Farbstoff umfasst, der in einer von der Trägermatrix in der ersten Zusammensetzung verschiedenen Trägermatrix eingebettet ist, wobei die zweite Zusammensetzung eine zweite Empfindlichkeit für den Zielanalyten aufweist, die von der ersten Empfindlichkeit für den Zielanalyten verschieden ist.

7. Werkzeug nach Anspruch 6, wobei es sich bei dem Zielanalyten um Sauerstoff handelt und die Arbeitsfühler (30w) und der Ersatzfühler (30r) den gleichen für Sauerstoff empfindlichen photolumineszierenden Farbstoff (31w, 31r) enthalten.

8. Werkzeug nach einem der vorangehenden Ansprüche, wobei es sich bei der gegebenen Variable um den Partialdruck eines Zielanalyten handelt.

9. Werkzeug nach einem der vorangehenden Ansprüche, wobei die Arbeitsgefäße (20w) und das Ersatzgefäß (20r) ohne Fühler identisch sind; und/oder wobei das Werkzeug mindestens 40 Arbeitsgefäße (20w) pro jedem Referenzgefäß umfasst und die Trägermatrix (32w) in den Arbeitsgefäßen (30w) hochgradig sauerstoffdurchlässig ist.

10. Verfahren zum Überprüfen des einwandfreien Betriebs eines Analyseinstruments (10), das speziell zum Abfragen von photolumineszierenden Arbeitsfühlern (30w) an Arbeitsgefäßen (20w) angepasst ist, die ein bestimmtes Ausführungsmerkmal aufweisen, das aus der aus Größe, Form, Außenumriss, Konfiguration und Lage bestehenden Gruppe ausgewählt ist, das ein Werkzeug gemäß einem der vorangehenden Ansprüche nutzt,
wobei das Referenzgefäß (20r) das bestimmte Ausführungsmerkmal aufweist und der Ersatzfühler (30r) ein wahrnehmbares Signal mit einem bekannten Wert erzeugt, wenn er abgefragt wird, umfassend folgende Schritte:
(a) Abfragen des Ersatzfühlers (30r) an dem Referenzgefäß (20r) des Werkzeugs mit dem Analyseinstrument (10), um ein wahrnehmbares Signal mit einem Referenzwert zu erzeugen, und
(b) Vergleichen des Referenzwerts mit dem bekannten Wert.

11. Verfahren nach Anspruch 10, wobei das Werkzeug gemäß einem der Ansprüche 4 bis 9 ist, ferner umfassend, vor Schritt (a), folgende Schritte:
(i) Platzieren von Aliquoten von einer oder mehreren Proben in eine Vielzahl der Arbeitsgefäße (20w), um gefüllte Arbeitsgefäße (20w) zu bilden,
(ii) regelmäßiges Abfragen der Arbeitsfühler (30w) an den gefüllten Arbeitsgefäßen (20w) mit dem Analyseinstrument über einen Prüfzeitraum hinweg, und
(iii) Aufzeichnen von aus der Abfrage der gefüllten Arbeitsfühler (30w) erhaltenen Daten, und
(c) nach dem Abfragen des Ersatzfühlers (30r) an dem Referenzgefäß (20r) des Werkzeugs und Vergleichen des Referenzwerts mit dem bekannten Wert, Bezeichnen der aufgezeichneten Daten als ungültig, wenn der Referenzwert um einen Grenzwert von dem bekannten Wert abweicht.

12. Verfahren nach Anspruch 10 oder 11, wobei das Verfahren wirksam ist, um eine verborgene Funktionsstörung zu erkennen.

## Revendications

1. Outil destiné à être utilisé en combinaison avec des récipients de travail (20w) ayant une certaine caractéristique de conception, choisie dans le groupe comprenant la taille, la forme, le contour extérieur, la configuration et l'emplacement, où les récipients de travail (20w) sont équipés d'une sonde de travail (30w) comprenant un matériau optiquement actif sensible à un analyte cible choisi parmi l'oxygène, le dioxyde de carbone, le monoxyde de carbone et le pH, d'un échantillon (50) placé à l'intérieur du récipient (20w) de manière à être capable de générer un signal perceptible reflétant la valeur d'un tel analyte cible détecté lorsqu'elle est interrogée par un instrument (10) spécifiquement adapté pour interroger des sondes de travail (30w) sur des récipients ayant la certaine caractéristique de conception,
ce par quoi l'outil comprend un récipient de référence (20r) séparé et distinct des récipients de travail (20w) tout en ayant la même certaine caractéristique de conception que les récipients de travail (20w), et une sonde de substitution (30r) sur le récipient de référence (20r), où ladite sonde de substitution (30r) a une sensibilité réduite audit analyte cible donné par rapport à ladite sonde de travail (30w) et est efficace pour générer de manière constante un signal perceptible de valeur connue lorsqu'elle est interrogée par l'instrument (10) quelle que soit la valeur réelle de l'analyte cible en communication avec la sonde de substitution (30r).

2. Outil selon la revendication 1, où (i) l'instrument (10) est efficace pour classer un échantillon à l'intérieur d'un récipient de travail (20w) comme un échantillon positif ou un échantillon négatif sur la base d'une valeur de seuil du signal perceptible généré par la sonde de travail (30w) sur le récipient de travail (20w) contenant l'échantillon (50), et (ii) la valeur connue est efficace pour amener le récipient de référence (20r) à être classé comme un échantillon positif lorsqu'il est interrogé par l'instrument (10).

3. Outil selon la revendication 1 ou 2, où ladite valeur connue est une valeur indicative d'un échantillon positif en communication avec une sonde de travail (30w) lorsqu'elle est interrogée par l'instrument (10) quelle que soit la valeur réelle de l'analyte cible en communication avec la sonde de substitution (30r).

4. Outil selon la revendication 3 destiné à être utilisé pour détecter des changements dans une caractéristique variable d'échantillons (50) de manière à permettre la classification de chaque échantillon comme un échantillon positif ou un échantillon négatif, où ledit récipient de travail (20w) comprend une pluralité de récipients de travail (20w), chacun étant équipé d'une sonde de travail (30w) sensible à un analyte cible donné d'un échantillon (10) placé dans le récipient (20w) et capable de générer un signal perceptible reflétant la valeur de cet analyte cible donné et au moins un récipient de référence équipé d'une sonde de substitution.

5. Outil selon l'une quelconque des revendications précédentes, où le récipient de référence (20r) est un flacon, une cuvette ou une plaque multipuits ; et/ou où la certaine caractéristique de conception inclut au moins une caractéristique parmi une configuration, un contour extérieur, un emplacement de la sonde de travail (30w) sur les récipients de travail (20w), et une taille ; et/ou où la sonde de substitution (30r) comprend une composition à l'état solide comprenant un colorant photoluminescent sensible à l' analyte cible noyé à l'intérieur d'une matrice de support qui est imperméable à l'analyte cible.

6. Outil selon l'une quelconque des revendications précédentes où (i) les sondes de travail (30w) comprennent une première composition à l'état solide comprenant un colorant photoluminescent sensible à l'analyte cible noyé à l'intérieur d'une matrice de support perméable à l'analyte cible, où la première composition a une première sensibilité à l'analyte cible, et (ii) la sonde de substitution (30r) comprend une deuxième composition à l'état solide comprenant un colorant photoluminescent sensible à l'analyte cible noyé à l'intérieur d'une matrice de support qui est différente de la matrice de support dans la première composition, où la deuxième composition a une deuxième sensibilité à l'analyte cible qui est différente de la première sensibilité à l'analyte cible.

7. Outil selon la revendication 6, où l'analyte cible est l'oxygène et les sondes de travail (30w) et la sonde de substitution (30r) contiennent le même colorant photoluminescent sensible à l'oxygène (31w, 31r).

8. Outil selon l'une quelconque des revendications précédentes, où la variable donnée est la pression partielle d'un analyte cible.

9. Outil selon l'une quelconque des revendications précédentes, où les vaisseaux de travail (20w) et le vaisseau de substitution (20r), sans sonde, sont identiques ; et/ou où l'outil inclut au moins 40 vaisseaux de travail (20w) par vaisseau de référence et la matrice de support (32w) dans les sondes de travail (30w) est hautement perméable à l'oxygène.

10. Procédé pour valider l'intégrité opérationnelle d'un instrument d'analyse (10) spécifiquement adapté pour interroger des sondes de travail photoluminescentes (30w) sur des récipients de travail (20w) ayant une caractéristique de conception particulière choisie dans le groupe comprenant la taille, la forme, le contour extérieur, la configuration et l'emplacement, en utilisant un outil selon l'une quelconque des revendications précédentes où le récipient de référence (20r) a la caractéristique de conception particulière et la sonde de substitution (30r) génère un signal perceptible ayant une valeur connue lorsqu'elle est interrogée, comprenant les étapes consistant à :
(a) interroger la sonde de substitution (30r) sur le récipient de référence (20r) de l'outil avec l'instrument d'analyse (10) pour générer un signal perceptible ayant une valeur de référence, et
(b) comparer la valeur de référence avec la valeur connue.

11. Procédé selon la revendication 10, dans lequel l'outil est selon l'une quelconque des revendications 4 à 9, comprenant en outre, avant l'étape (a), les étapes consistant à :
(i) placer des quantités aliquotes d'un ou plusieurs échantillons dans une pluralité des récipients de travail (20w) pour former des récipients de travail remplis (20w),
(ii) interroger périodiquement les sondes de travail (30w) sur les récipients de travail remplis (20w) avec l'instrument d'analyse pendant toute une période de test, et
(iii) enregistrer les données obtenues à partir de l'interrogation des sondes de travail remplies (30w), et
(c) après avoir interrogé la sonde de substitution (30r) sur le récipient de référence (20r) de l'outil et comparé la valeur de référence à la valeur connue, désigner les données enregistrées comme invalides lorsque la valeur de référence s'écarte de la valeur connue d'une valeur seuil.

12. Procédé selon la revendication 10 ou 11, où le procédé est efficace pour détecter un dysfonctionnement masqué.
